# EUROPEAN PATENT APPLICATION

(11) **EP 4 632 639 A1**
(43) Date of publication of application: **15.10.2025**
(21) Application number: 25163439.0
(22) Date of filing: 13.03.2025
(51) Int. Cl.: G06Q 10/047, G06Q 10/06, G06Q 10/0631, G06Q 10/087

(54) **WORK PLANNING PROGRAM, WORK PLANNING METHOD, AND INFORMATION PROCESSING DEVICE**

(30) Priority: 12.04.2024 JP 2024064839
(71) Applicant: FUJITSU LIMITED, Kawasaki-shi, Kanagawa 211-8588 (JP)
(72) Inventor: HIDA, Masaharu, Kawasaki-shi 211-8588 (JP); YAMAZAKI, Takashi, Kawasaki-shi 211-8588 (JP)
(74) Representative: Haseltine Lake Kempner LLP

(57) **Abstract**

A work planning program for causing a computer to execute first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition, and second specification processing of selecting a candidate route in which the total sum of the movement distances of each of the plurality of workers satisfies a second predetermined condition among the plurality of candidate routes obtained by executing the first specification processing, and specifying a travel order in which the total sum of the movement distances of each of the plurality of workers satisfies a third predetermined condition by exchanging the travel order in the combination of the orders assigned to each of the plurality of workers.

## Description

### FIELD

The embodiment discussed herein is related to a work planning program, a work planning method, and an information processing device.

### BACKGROUND

A technology for efficiently performing work such as picking work is disclosed.

### Citation List

### Patent Document

Japanese National Publication of International Patent Application No. 2021-516803
Japanese Laid-open Patent Publication No. 2020-040836
U.S. Patent No. 10783462
US Patent Publication No. 2018/0218311

### SUMMARY OF INVENTION

### TECHNICAL PROBLEM

It is needed to reduce a total movement distance in work involving movement such as picking work. However, in a case where no limitation is provided on a movement direction, there is a possibility that the number of combinations becomes enormous and a calculation load increases.

In one aspect, an object of the present case is to provide a work planning program, a work planning method, and an information processing device that are capable of making a work plan while suppressing a calculation load.

### SOLUTION TO PROBLEM

According to an aspect of the embodiments, a work planning program for causing a computer to execute first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition, and second specification processing of selecting a candidate route in which the total sum of the movement distances of each of the plurality of workers satisfies a second predetermined condition among the plurality of candidate routes obtained by executing the first specification processing, and specifying a travel order in which the total sum of the movement distances of each of the plurality of workers satisfies a third predetermined condition by exchanging the travel order in the combination of the orders assigned to each of the plurality of workers.

### ADVANTAGEOUS EFFECTS OF INVENTION

A work plan may be made while suppressing a calculation load.

### BRIEF DESCRIPTION OF DRAWINGS

FIG. 1 is a diagram exemplifying order batching in which a combination of three orders is set as one batch;
FIG. 2A is a diagram exemplifying an order of #1, FIG. 2B is a diagram exemplifying an order of #2, and FIG. 2C is a diagram exemplifying an order of #1 + #2;
FIG. 3A is a block diagram exemplifying an overall configuration of an information processing device, and FIG. 3B is a block diagram exemplifying a hardware configuration of the information processing device;
FIG. 4 is a flowchart representing processing executed by the information processing device;
FIG. 5 is a diagram exemplifying a layout;
FIG. 6 is a diagram exemplifying the layout;
FIGs. 7A and 7B are diagrams exemplifying the layout to which orders are assigned;
FIG. 8 is a diagram exemplifying a candidate route 1;
FIG. 9 is a diagram exemplifying a candidate route 2;
FIG. 10 is a diagram exemplifying a candidate route 3;
FIG. 11 is a diagram exemplifying a candidate route 4;
FIG. 12A is a diagram illustrating a result of order batching optimization, and FIG. 12B is a diagram exemplifying a result of traveling salesman problem (TSP) solving and a total movement distance;
FIG. 13 is a diagram exemplifying a result in a case where the order batching optimization is performed for the candidate route 3;
FIG. 14 is a diagram exemplifying a result of the TSP solving for picking routes in FIG. 13;
FIG. 15A is a diagram exemplifying a combination in which a head batch is confirmed, and FIG. 15B is a diagram exemplifying a result of the order batching optimization in remaining orders;
FIG. 16 exemplifies an order batching result for each confirmed batch; and
FIG. 17 is a diagram exemplifying an optimal solution output in step S9.

### DESCRIPTION OF EMBODIMENTS

Prior to description of an embodiment, an outline of picking work will be described. First, a delivery company receives a plurality of orders from a customer. Each order includes a picking instruction for one or a plurality of articles. There are a plurality of picking workers in the delivery company, and one or a plurality of orders (combination of orders) are assigned to each worker, and each worker travels article shelves in a warehouse and picks up an article placed in a predetermined article shelf according to the instruction of the assigned order. Under such conditions, a solution method for a problem that minimizes a total value of movement distances (total movement distance) of the plurality of workers is desired.

In picking work in the warehouse, a method is often used in which a worker goes around the warehouse and places a picked-up article in a cart or a container. One method for coping with suppression of labor costs and an increase in a warehouse scale due to an increase in a distribution amount due to a social situation is minimization of the total movement distance. A key to effectively minimize the total movement distance is to improve efficiency of combining orders and performing calculation thereof.

In a one-way warehouse, when orders are determined, picking routes with the shortest total movement distance is also determined. Therefore, it is possible to optimize a combination of orders so as to minimize the total movement distance (order batching optimization). However, in a free-layout warehouse in which no limitation is provided on a movement direction, since it is difficult to determine the shortest picking routes, the order batching optimization may not be applied.

There is also an idea of selecting picking routes for one time from all the orders and performing calculation by solving a traveling salesman problem (TSP) each time. However, in order to shorten the total movement distance, it is needed to perform the TSP solving for all the order combinations, and it is also needed to further extract a combination that results in the shortest total movement distance. Therefore, there is a possibility that a calculation amount becomes enormous.

Here, an outline of an order batching optimization method will be described. It is assumed that the order batching optimization method is based on sequential optimization and a solution method of a small-scale problem is a round robin. Specific rules are as follows. • Rule 1

Orders to be assigned to combinations (batches) are confirmed one by one. • Rule 2

A head of a candidate order column is assigned to the combination to which the order is not assigned. • Rule 3

For the combination to which the order is assigned, the order that results in the shortest movement distance is searched for in a round-robin manner sequentially from the head of the candidate order column.

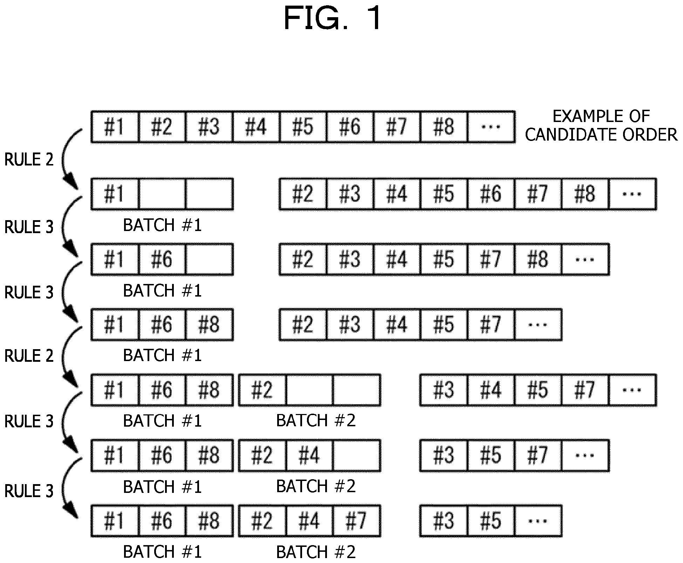

FIG. 1 is a diagram exemplifying order batching in which a combination of three orders is set as one batch. An uppermost row of FIG. 1 exemplifies a candidate order column. In the candidate order column, order columns are formed in order of #1, #2, and #3. First, an order of #1 is placed in the first place of a batch #1 according to the rule 2. Next, an order of #6 is placed in the second place of the batch #1 according to the rule 3. Next, an order of #8 is placed in the third place of the batch #1 according to the rule 3. Next, an order of #2 is placed in the first place of a batch #2 according to the rule 2. Next, an order of #4 is placed in the second place of the batch #2 according to the rule 3. Next, an order of #7 is placed in the third place of the batch #2 according to the rule 3.

As a premise that this order batching is possible, it is needed to easily determine pick-up order of the orders to be incorporated in the batches. When the pick-up order is not easily determined, it is needed to separately perform optimization for determining the pick-up order that minimizes the total movement distance.

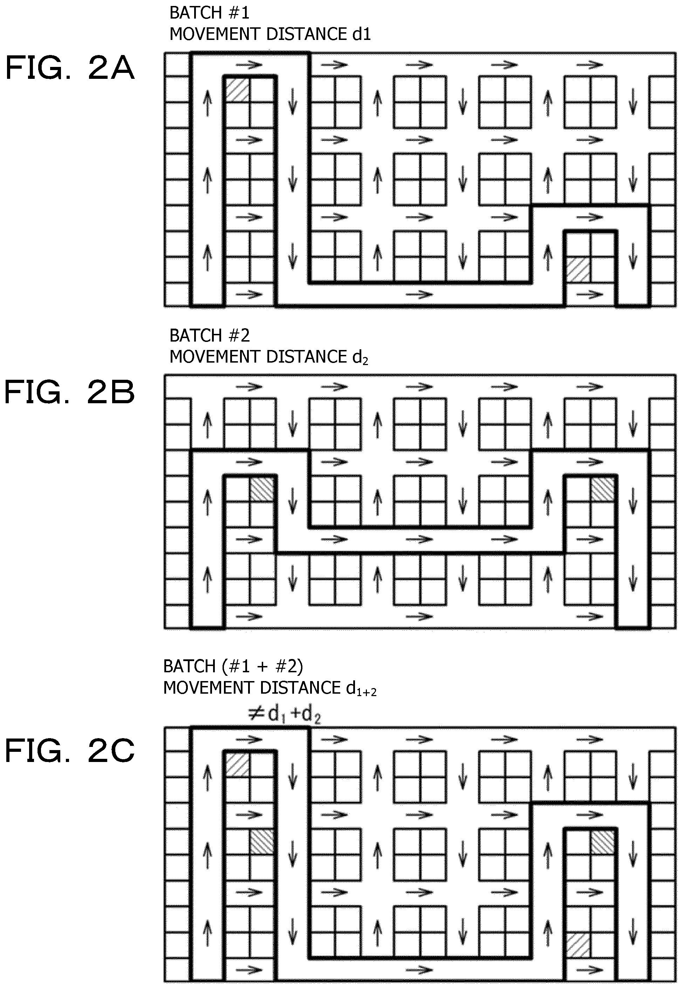

Here, a problem of the order batching optimization method will be described. In the order batching, the total movement distance is an objective variable. The total movement distance, which is the objective variable, varies depending on the combination of orders. FIG. 2A is a diagram exemplifying the order of #1. Picking up for hatched article shelves is performed. It is assumed that a movement distance of the order of #1 is d₁. FIG. 2B is a diagram exemplifying the order of #2. Picking up for hatched article shelves is performed. It is assumed that a movement distance of the order of #2 is d₂.

FIG. 2C is a diagram exemplifying a batch (order of #1 + order of #2). When the order of #1 and the order of #2 are combined, the shortest movement distance d₁₊₂ is not the movement distance d₁ + the movement distance d₂.

Assuming a one-way warehouse, the movement distance may be uniquely calculated by candidate orders of the batch. However, in a warehouse assuming free traveling, the movement distance may not be uniquely calculated. Therefore, it is needed to optimize picking order that results in the minimum movement route for each batch candidate, and there is a possibility that a calculation load of the order batching becomes enormous.

As described above, in the free-layout warehouse in which the movement direction is not limited, the order batching optimization may not be simply applied. There is a possibility that enormous calculation is needed to perform the TSP solving each time and extract an optimum combination from all orders. Therefore, in the following embodiment, an example will be described in which a work plan may be made while suppressing the calculation load.

### [First Embodiment]

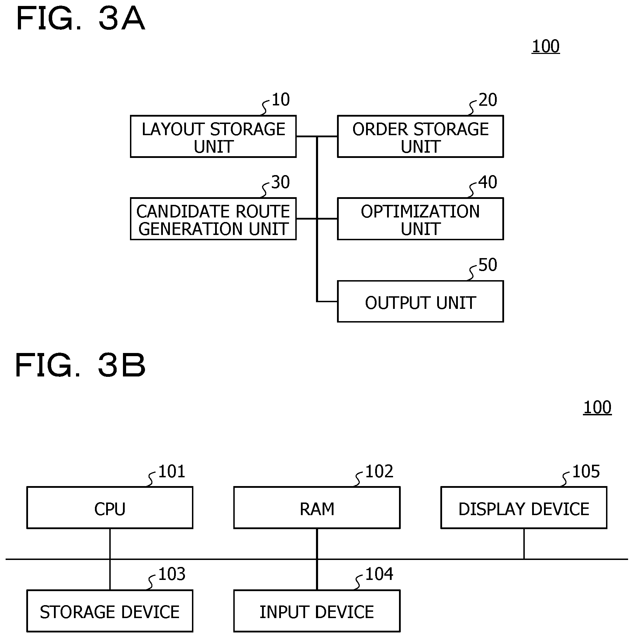

FIG. 3A is a block diagram exemplifying an overall configuration of an information processing device 100. As exemplified in FIG. 3A, the information processing device 100 includes a layout storage unit 10, an order storage unit 20, a candidate route generation unit 30, an optimization unit 40, an output unit 50, and the like.

FIG. 3B is a block diagram exemplifying a hardware configuration of the information processing device 100. As exemplified in FIG. 3B, the information processing device 100 includes a central processing unit (CPU) 101, a random access memory (RAM) 102, a storage device 103, an input device 104, a display device 105, and the like.

The CPU 101 is a central processing unit. The CPU 101 includes one or more cores. The RAM 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores a work planning program. The input device 104 is an input device such as a keyboard or a mouse. The display device 105 is a display device such as a liquid crystal display (LCD). The layout storage unit 10, the order storage unit 20, the candidate route generation unit 30, the optimization unit 40, and the output unit 50 are implemented by the CPU 101 executing the work planning program. Note that hardware such as a dedicated circuit may be used as the layout storage unit 10, the order storage unit 20, the candidate route generation unit 30, the optimization unit 40, and the output unit 50.

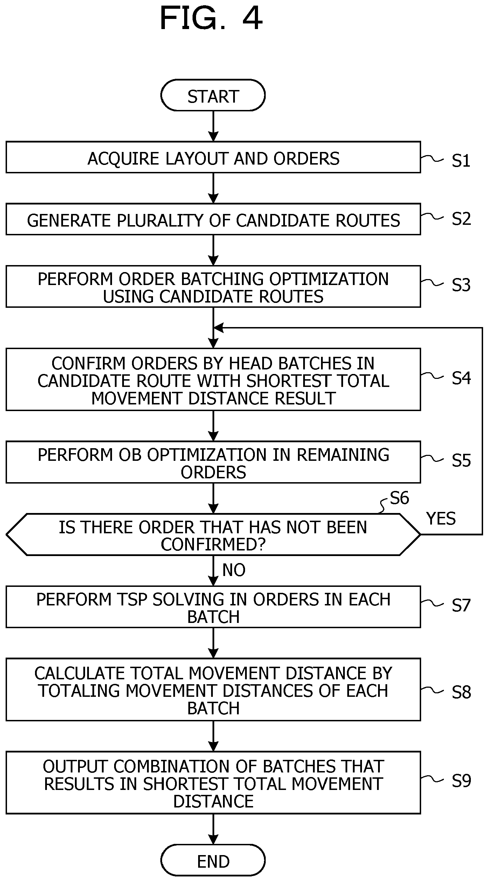

FIG. 4 is a flowchart representing processing executed by the information processing device 100. Hereinafter, each type of the processing executed by the information processing device 100 will be described with reference to FIG. 4.

First, the candidate route generation unit 30 acquires a layout stored in the layout storage unit 10 and orders stored in the order storage unit 20 (step S1).

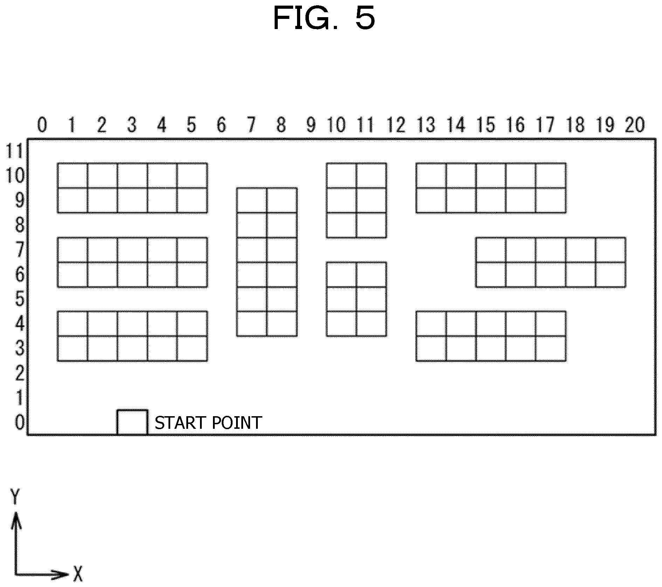

The layout storage unit 10 stores the layout of a warehouse. The layout may be represented by two-dimensional coordinates. For example, the layout may be represented by coordinates (x, y) of an x axis and a y axis orthogonal to each other. Each article shelf is specified by an x coordinate and a y coordinate. Coordinates to which an article shelf is set may not pass, and coordinates to which no article shelf is set may pass. In the example of FIG. 5, the respective coordinates of (1,3), (2,3), (3,3), (4,3), (5,3), (1,4), (2,4), (3,4), (4,4), (5,4), and the like are set to article shelves. Furthermore, a start point is set in the layout. In the example of FIG. 5, as an example, (3,0) is set as the start point.

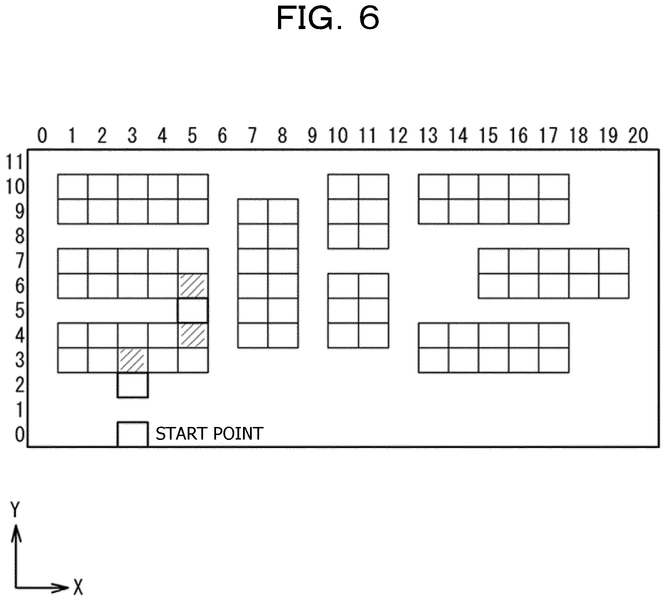

Furthermore, in the layout, a position for picking up an article in each article shelf is determined. For example, in the example of FIG. 6, a pick-up position for picking up an article in a hatched article shelf of (3, 3) is determined as (3, 2) surrounded by a thick frame, and a pick-up position for picking up articles in hatched article shelves of (5, 4) and (5, 6) are determined as (5, 5) surrounded by a thick frame. In this manner, for each pick-up position, there may be one article shelf for which picking up may be performed, or there may be two article shelves in a back to back relationship for which picking up may be performed.

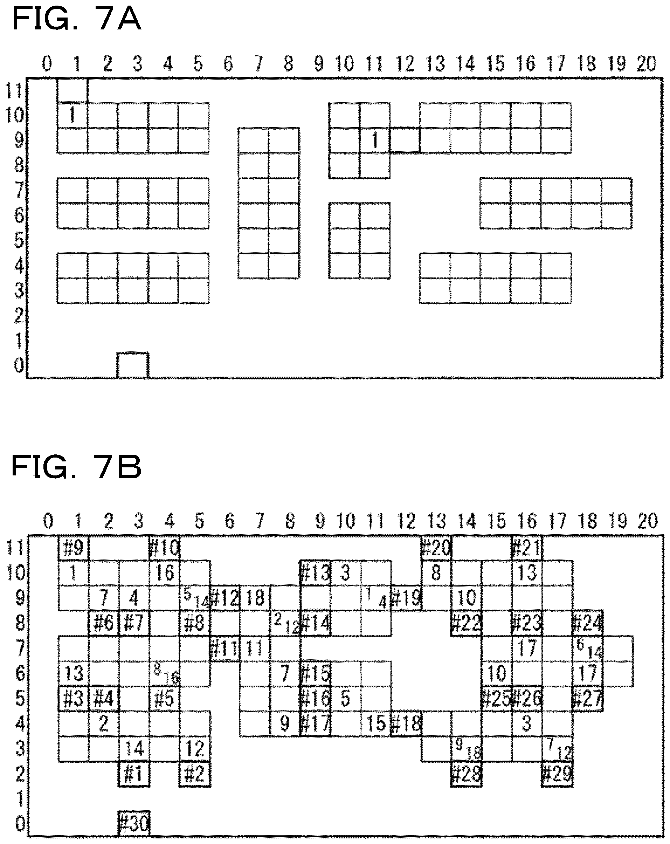

The order storage unit 20 stores the orders. As an example, the order storage unit 20 stores the orders including orders 1 to 18. In each order, an article shelf for which picking up is to be performed is associated. For example, in the example of FIG. 7A, in the order 1, an article shelf of (1, 10) and an article shelf of (11, 9) are associated. In order to complete the order 1, it is needed to pick up an article in the article shelf of (1, 10) at a pick-up position of (1, 11) surrounded by a thick frame and pick up an article in the article shelf of (11, 9) at a pick-up position of (12, 9) surrounded by a thick frame.

FIG. 7B is the layout in which all the orders including the orders 1 to 18 are written. The corresponding order numbers are written in the article shelves. Furthermore, pick-up positions #1 to #30 corresponding to the article shelves for which picking up is specified are written. For example, in order to pick up the articles of the order 1, it is needed to pass through the pick-up position #9 and the pick-up position #19.

FIG. 4 is referred to again. After the execution of step S1, the candidate route generation unit 30 generates a plurality of candidate routes passing through all the pick-up positions #1 to #30 (step S2). A method of generating the plurality of candidate routes is not particularly limited, but it is desirable to have a variety of changes such as a different passing order for each candidate route. For example, distances between a plurality of pick-up positions at which picking up may be performed for two article shelves in a back to back relationship are varied, and a route passing through all the pick-up positions is created. Since it is needed to consider a detour in the case of the back to back relationship, it is possible to change the candidate routes by varying the distances between the plurality of pick-up positions at which picking up may be performed for the two article shelves in the back to back relationship.

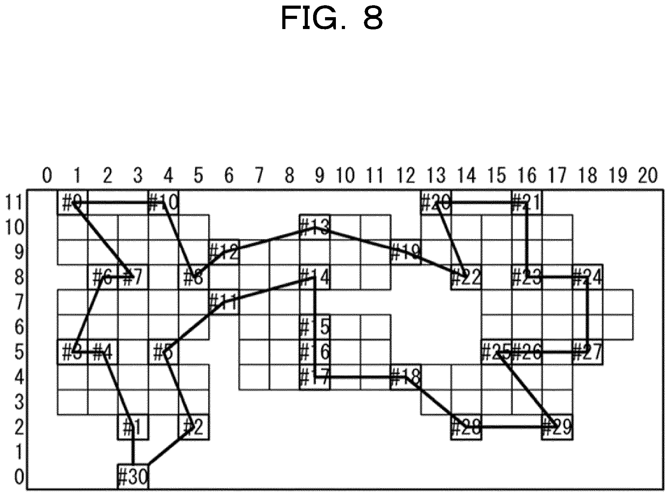

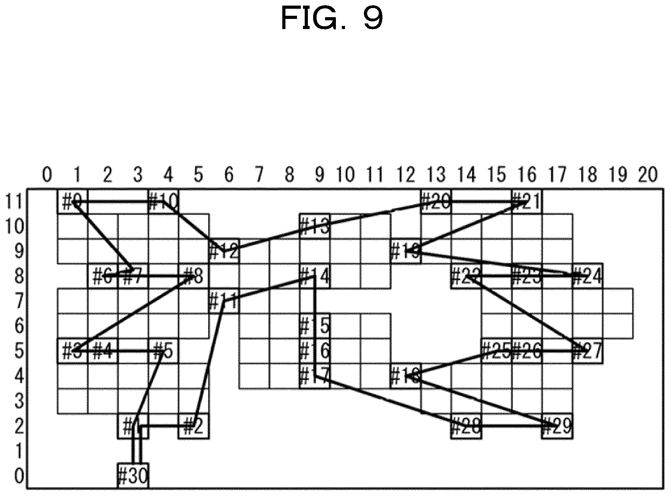

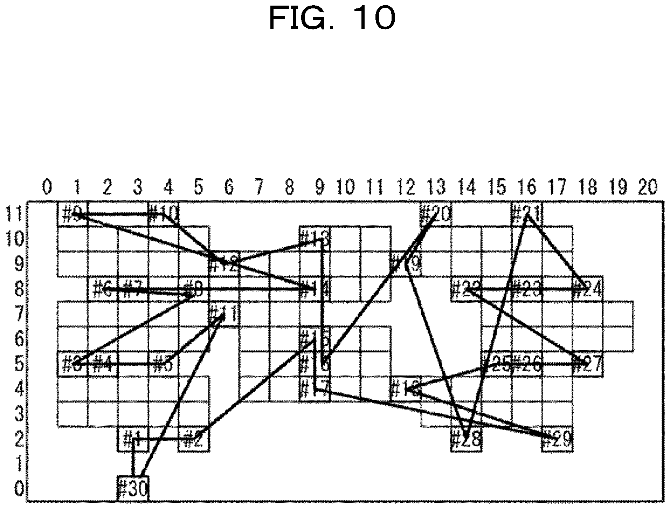

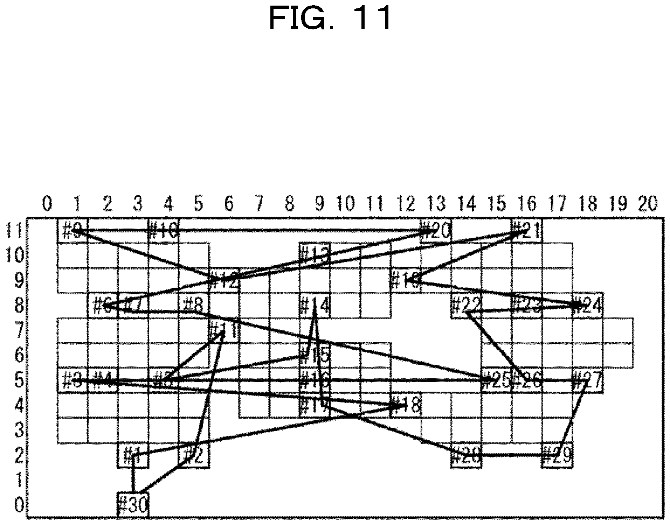

FIG. 8 is a diagram exemplifying a candidate route 1. In the candidate route 1, the pick-up positions are passed through in a counterclockwise direction in order of the pick-up position #2, the pick-up position #5, the pick-up position #11, the pick-up positions #14,.... FIG. 9 is a diagram exemplifying a candidate route 2. In the candidate route 2, the pick-up positions are passed through in the counterclockwise direction in order of the pick-up position #1, the pick-up position #2, the pick-up position #11, the pick-up positions #14,.... FIG. 10 is a diagram exemplifying a candidate route 3. In the candidate route 3, the pick-up positions are passed through in the counterclockwise direction in order of the pick-up position #1, the pick-up position #2, the pick-up position #15, the pick-up positions #16,.... FIG. 11 is a diagram exemplifying a candidate route 4. In the candidate route 4, the pick-up positions are passed through in the counterclockwise direction in order of the pick-up position #2, the pick-up position #11, the pick-up position #5, the pick-up positions #15,....

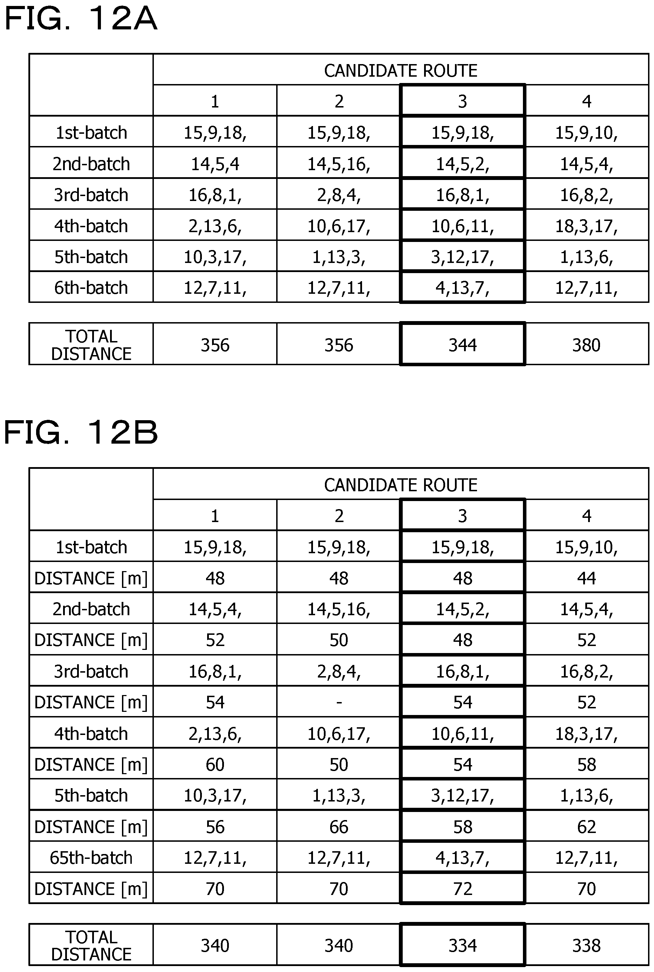

FIG. 4 is referred to again. After the execution of step S2, the optimization unit 40 performs order batching optimization for each candidate route (step S3). FIG. 12A is a diagram illustrating a result of the order batching optimization. Furthermore, the optimization unit 40 calculates a total movement distance using a predetermined algorithm such as the TSP solving in the orders of each batch based on the result of the order batching optimization of FIG. 12A. FIG. 12B is a diagram exemplifying a result of the TSP solving and the total movement distance. In the example of FIG. 12B, the total movement distance of the candidate route 3 is the shortest.

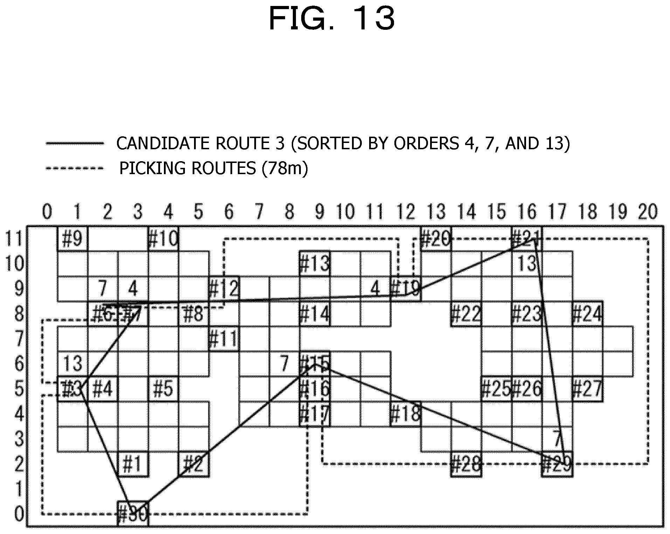

For example, FIG. 13 is a diagram exemplifying a result in a case where the order batching optimization is performed for the candidate route 3. In FIG. 13, solid lines connecting the respective pick-up positions are sorted in order of the order 4, the order 7, and the order 13 in the candidate route 3. In FIG. 13, dotted lines indicate picking routes passing through passages in the layout. A total length of the picking routes is 78 m. Picking is sequentially performed in the candidate routes sorted by picking positions corresponding to the orders. The total movement distance is a sum of distances between the pick-up positions calculated by a Manhattan distance.

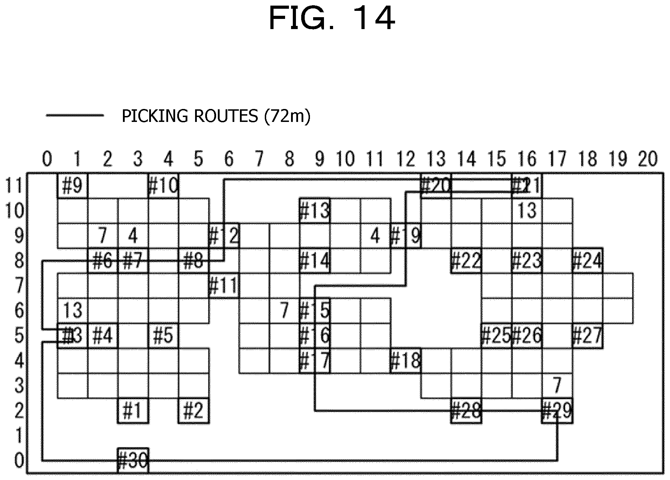

FIG. 14 is a diagram exemplifying a result of the TSP solving for the picking routes in FIG. 13. As exemplified in FIG. 14, picking order is solved by the TSP so that the total movement distance is minimized. For example, in the example of FIG. 13, the pick-up position #6 and the pick-up position #7 are reciprocated, but there is only the forward route in the example of FIG. 14. In the example of FIG. 14, a total length of the picking routes is 72 m.

FIG. 4 is referred to again. After the execution of step S3, the optimization unit 40 causes the RAM 102 or the storage device 103 to hold the result of the order batching optimization in step S3. Furthermore, the optimization unit 40 confirms a combination of head batches for the candidate route with the shortest total movement distance based on the result of the order batching optimization in step S3 (step S4). In the example of FIGs. 12A and 12B, since the total movement distance of the candidate route 3 is the shortest, the 1st batch of the candidate route 3 (combination of the order 15, the order 9, and the order 18) is confirmed as the head batch.

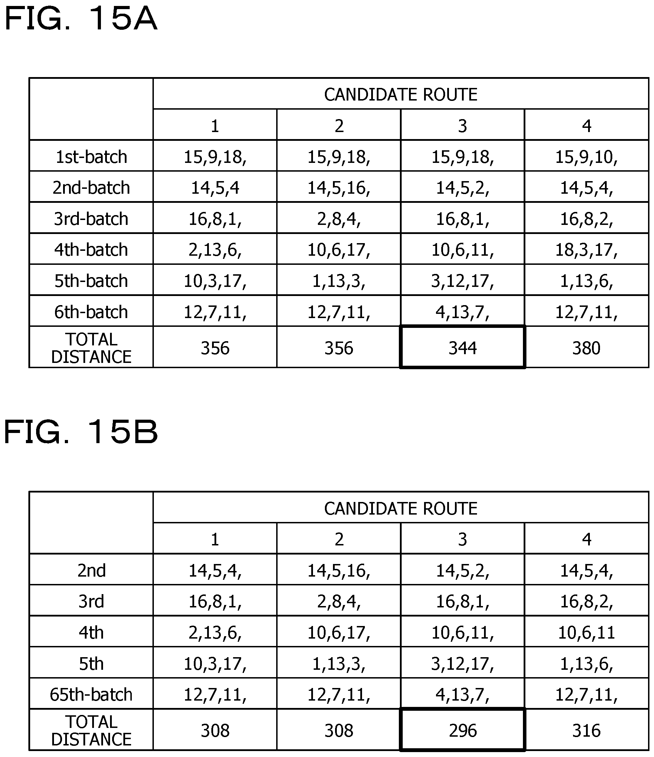

Next, the optimization unit 40 performs the order batching optimization in the remaining orders not confirmed in step S4 for each candidate route (step S5). In FIGs. 12A and 12B, in each candidate route, the order batching optimization is performed in the orders other than the order 15, the order 9, and the order 18. FIG. 15A exemplifies the confirmed combination of the head batches. FIG. 15B exemplifies a result of the order batching optimization in the remaining orders.

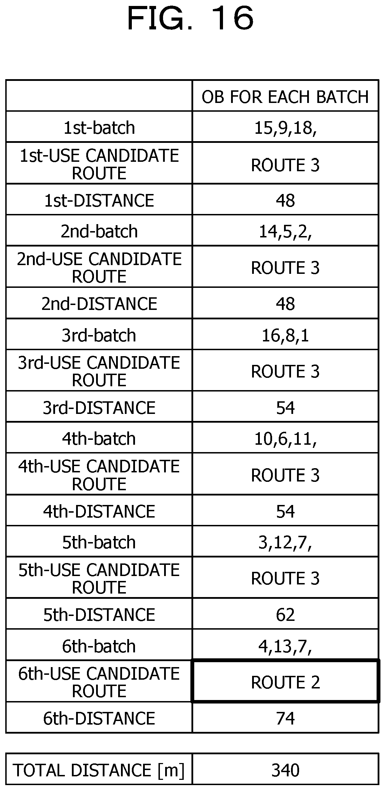

FIG. 4 is referred to again. Next, the optimization unit 40 determines whether or not there is an order that has not been confirmed (step S6). In a case where it is determined as "Yes" in step S6, step S4 and the subsequent steps are executed again. As a result, the processing of steps S4 and S5 is executed until there is no order to perform the order batching optimization. FIG. 16 exemplifies an order batching result for each confirmed batch. In FIG. 16, order batching is performed up to the sixth batch until there is no order.

In a case where it is determined as "No" in step S6, the optimization unit 40 reads the result of step S3 held in the RAM 102 or the storage device 103, and performs the TSP solving for each of the read result of step S3 and results obtained by repeating steps S4 to S6 in the orders in each batch (step S7).

Next, the optimization unit 40 calculates the total movement distance by totaling movement distances of each batch (step S8).

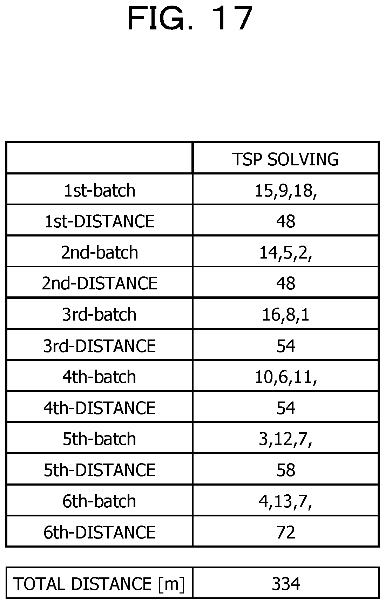

Next, the optimization unit 40 outputs, as an optimal solution, a combination of batches that results in the shortest total movement distance among results obtained by the execution of step S8 (step S9). Thereafter, the execution of the flowchart ends. FIG. 17 is a diagram exemplifying the optimal solution output in step S9.

According to the present embodiment, the combination of the batches may be specified by one or both of steps S1 to S3 and S7 and steps S1 to S7.

According to the execution method of steps S1 to S3 and S7, each batch (combination of orders) is specified by executing the order batching optimization for each of the plurality of candidate routes, and order of the orders is exchanged in each batch to specify a travel order. According to this method, the order batching optimization may be applied to a free-layout in which a movement direction is not limited. As a result, a work plan may be made while suppressing a calculation load.

Furthermore, according to the execution method of steps S1 to S7, each batch (combination of orders) is specified by executing the order batching optimization for each of the plurality of candidate routes, the 1st batch of the candidate route with the shortest total movement distance among the respective candidate routes is confirmed as the head batch, the order batching optimization is executed for the remaining orders among the respective candidate routes, and the first batch of the candidate route with the shortest total movement distance among the respective candidate routes is confirmed as the next batch. According to this method, the order batching optimization may be applied to a free-layout in which a movement direction is not limited. As a result, a work plan may be made while suppressing a calculation load.

Moreover, by executing step S9, a result with a shorter movement distance is adopted among the result obtained by executing steps S1 to S3 and S7 and the result obtained by executing steps S1 to S7, so that a work plan with a shorter total movement distance may be made.

Here, a calculation scale (scale of a target order combination) will be described. As a major influence factor on the calculation scale, in the case of calculation each time, there are ₁₈C₃ = 816 sets of combinations for selecting three orders from 18 orders. For these combinations, there are 2⁸¹⁶ = 4.37 × 10²⁴⁵ patterns of combinations of 0 and 1. On the other hand, in the present embodiment, there are the 30 pick-up positions and 30! = 2.65 × 10³² patterns. Therefore, in the method of the present embodiment, the calculation scale may be significantly reduced.

As described above, in the present embodiment, the total movement distance may be effectively reduced in the free-layout warehouse in which the movement direction is not limited. Furthermore, the number of combinations used for the calculation may be significantly reduced as compared with the case of the calculation each time. Furthermore, since an information amount increases as the number of shelves in the warehouse increases and the number of pick-up positions between the shelves increases, the effect of the present embodiment becomes larger.

Note that, in the present embodiment, the picking up for collecting the articles has been described as an example of the work, but content of the work is not limited to the picking up. For example, the work includes work of returning the article to the article shelf.

In the examples described above, step S3 in FIG. 4 is an example of first specification processing. Steps S7 to S9 in FIG. 4 are examples of second specification processing. Repetition of Steps S4 to S6 in FIG. 4 are examples of third specification processing. Steps S7 to S9 in FIG. 4 are examples of fourth specification processing. The optimization unit 40 is an example of an execution unit.

Although the embodiment of the present disclosure has been described in detail thus far, the present disclosure is not limited to such a specific embodiment and various modifications and alterations may be made within the scope of the present disclosure described in the claims.

## Claims

1. A work planning program for causing a computer to execute:
first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition; and
second specification processing of selecting a candidate route in which the total sum of the movement distances of each of the plurality of workers satisfies a second predetermined condition among the plurality of candidate routes obtained by executing the first specification processing, and specifying a travel order in which the total sum of the movement distances of each of the plurality of workers satisfies a third predetermined condition by exchanging the travel order in the combination of the orders assigned to each of the plurality of workers.

2. The work planning program according to claim 1, for causing the computer to further execute:
third specification processing of repeatedly selecting, among the plurality of candidate routes obtained by executing the first specification processing, a candidate route in which the total sum of the movement distances of each of the plurality of workers satisfies the second predetermined condition, specifying one combination of the orders included in the selected candidate route, and specifying and adding combinations for remaining orders in the plurality of candidate routes; and
fourth specification processing of specifying a travel order in which the total sum of the movement distances of each of the plurality of workers satisfies the second predetermined condition by exchanging the travel order in each of the combinations of the orders obtained by executing the third specification processing.

3. The work planning program according to claim 1, wherein, in the first specification processing, for each of the plurality of candidate routes, each of the combination of orders is specified such that the total sum of the movement distances in which each of the plurality of workers travels the work positions specified by the combination of the orders assigned to each of the plurality of workers is minimized.

4. The work planning program according to claim 1, wherein, in the second specification processing, a candidate route in which the total sum of the movement distances of each of the plurality of workers is minimized is selected from the plurality of candidate routes obtained by the first specification processing, and a travel order in which the total sum of the movement distances of each of the plurality of workers is minimized is specified by exchanging the travel order among the combinations of orders assigned to each of the plurality of workers.

5. The work planning program according to claim 2, wherein, in the fourth specification processing, a travel order in which the total sum of the movement distances of each of the plurality of workers is minimized is specified by exchanging the travel order in each combination of the orders obtained by executing the third specification processing.

6. A work planning program for causing a computer to execute:
first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition;
third specification processing of repeatedly selecting, among the plurality of candidate routes obtained by executing the first specification processing, a candidate route in which the total sum of the movement distances of each of the plurality of workers satisfies a second predetermined condition, specifying one combination of the orders included in the selected candidate route, and specifying and adding combinations for remaining orders in the plurality of candidate routes; and
fourth specification processing of specifying a travel order in which the total sum of the movement distances of each of the plurality of workers satisfies the second predetermined condition by exchanging the travel order in each of the combinations of the orders obtained by executing the third specification processing.

7. A work planning method implemented a computer, the work planning method comprising:
first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition; and
second specification processing of selecting a candidate route in which the total sum of the movement distances of each of the plurality of workers satisfies a second predetermined condition among the plurality of candidate routes obtained by executing the first specification processing, and specifying a travel order in which the total sum of the movement distances of each of the plurality of workers satisfies a third predetermined condition by exchanging the travel order in the combination of the orders assigned to each of the plurality of workers.

8. A work planning method implemented by a computer, the work planning method comprising:
first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition;
third specification processing of repeatedly selecting, among the plurality of candidate routes obtained by executing the first specification processing, a candidate route in which the total sum of the movement distances of each of the plurality of workers satisfies a second predetermined condition, specifying one combination of the orders included in the selected candidate route, and specifying and adding combinations for remaining orders in the plurality of candidate routes; and
fourth specification processing of specifying a travel order in which the total sum of the movement distances of each of the plurality of workers satisfies the second predetermined condition by exchanging the travel order in each of the combinations of the orders obtained by executing the third specification processing.

9. An information processing device comprising:
a processing unit configured to execute first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition, and second specification processing of selecting a candidate route in which the total sum of the movement distances of each of the plurality of workers satisfies a second predetermined condition among the plurality of candidate routes obtained by executing the first specification processing, and specifying a travel order in which the total sum of the movement distances of each of the plurality of workers satisfies a third predetermined condition by exchanging the travel order in the combination of the orders assigned to each of the plurality of workers.

10. The information processing device according to claim 9, the processing unit configured to further execute third specification processing of repeatedly selecting, among the plurality of candidate routes obtained by executing the first specification processing, a candidate route in which the total sum of the movement distances of each of the plurality of workers satisfies the second predetermined condition, specifying one combination of the orders included in the selected candidate route, and specifying and adding combinations for remaining orders in the plurality of candidate routes, and fourth specification processing of specifying a travel order in which the total sum of the movement distances of each of the plurality of workers satisfies the second predetermined condition by exchanging the travel order in each of the combinations of the orders obtained by executing the third specification processing.

11. The information processing device according to claim 9, wherein, in the first specification processing, for each of the plurality of candidate routes, the processing unit specifies each of the combination of orders such that the total sum of the movement distances in which each of the plurality of workers travels the work positions specified by the combination of the orders assigned to each of the plurality of workers is minimized.

12. The information processing device according to claim 9, wherein, in the second specification processing, the processing unit selects a candidate route in which the total sum of the movement distances of each of the plurality of workers is minimized from the plurality of candidate routes obtained by the first specification processing, specifies a travel order in which the total sum of the movement distances of each of the plurality of workers is minimized by exchanging the travel order among the combinations of orders assigned to each of the plurality of workers.

13. The information processing device according to claim 9, wherein, in the fourth specification processing, the processing unit specifies a travel order in which the total sum of the movement distances of each of the plurality of workers is minimized by exchanging the travel order in each combination of the orders obtained by executing the third specification processing.

14. An information processing device comprising:
a processing unit configured to execute first specification processing of specifying, for each of a plurality of candidate routes to sequentially travel a plurality of work positions included in a plurality of orders, each of combinations of the orders such that a total sum of movement distances, in which each of a plurality of workers travels work positions specified by a combination of orders assigned to each of the plurality of workers in a case where the plurality of orders is assigned to the plurality of workers, satisfies a first predetermined condition, third specification processing of repeatedly selecting, among the plurality of candidate routes obtained by executing the first specification processing, a candidate route in which the total sum of the movement distances of each of the plurality of workers satisfies a second predetermined condition, specifying one combination of the orders included in the selected candidate route, and specifying and adding combinations for remaining orders in the plurality of candidate routes, and fourth specification processing of specifying a travel order in which the total sum of the movement distances of each of the plurality of workers satisfies the second predetermined condition by exchanging the travel order in each of the combinations of the orders obtained by executing the third specification processing.
